Europäisches Patentamt

European Patent Office

Office européen des brevets

(11) Publication number: **0 019 459**
**B1**

## EUROPEAN PATENT SPECIFICATION

(45) Date of publication of patent specification: **08.01.86**

(51) Int. Cl.⁴: **A 43 D 1/00**

(21) Application number: **80301579.1**

(22) Date of filing: **14.05.80**

(54) Method and apparatus for the design and manufacture of footwear.

(30) Priority: **14.05.79 GB 7916715**

(43) Date of publication of application:
**26.11.80 Bulletin 80/24**

(45) Publication of the grant of the patent:
**08.01.86 Bulletin 86/02**

(84) Designated Contracting States:
**AT BE CH DE FR GB IT LI LU NL SE**

(56) References cited:
**DE-A-2 002 618**
**DE-A-2 656 997**
**US-A-3 696 456**

**IBM TECHNICAL DISCLOSURE BULLETIN, vol.
14, no. 4, September 1971, pages 1252-1257
New York, U.S.A. R.L. ADLER: "Geometric
pattern grading"**

(73) Proprietor: **CLARKS LIMITED
Street
Somerset (GB)**

(72) Inventor: **Darvill, Anthony, Noel
C/O Clarks Limited Street
Somerset (GB)**
Inventor: **Flutter, Arthur Godfrey
90 Cambridge Road
Waterbeach Cambridge (GB)**
Inventor: **Moran, Timothy Sean
20 Masefield Avenue
Eaton Ford St.Neots Cambridge (GB)**
Inventor: **Evans, Michael Andrew
62 Glisson Road
Cambridge (GB)**
Inventor: **Stokes, Simon Treleon Stephen
47 Owlstone Road
Cambridge (GB)**
Inventor: **Easterfield, Mark
9 Spurgeons Avenue
Waterbeach Cambridge (GB)**

(74) Representative: **Smith, Martin Stanley et al
Stevens, Hewlett & Perkins 5, Quality Court
Chancery Lane
London WC2A 1HZ (GB)**

## Description

The invention relates to a method and apparatus for the design and manufacture of footwear. It will be helpful firstly to describe briefly a design procedure for a shoe, in which definitions for various terms will be given.

Firstly, a MODEL LAST is produced, which is a solid last of a particular shoe size, the exterior shape of which forms the interior shape of the shoe. A DRAPE is formed on the model last, being a plastics skin tightly conforming to the shape of the last. The stylist draws STYLE LINES on the drape, which are lines defining the top line of the shoe and other lines such as where separate pieces of leather will join or where there is a line of stitching, for example. DESIGN SHAPES such as bows, diamond shapes etc., may be added. The shoe drawn on the drape has certain LAST PARAMETERS. These are dimensions or MEASURES, such as heel height; length of shoe; curvilinear distance between defined pairs of points; and cross-sectional areas of defined curves such as those defining the throat and waist of the shoe, for example.

Next, the drape is cut from the model last and flattened between rollers. The flattened drape gives the shape of the NETT LAST PATTERN and this, when carrying the correspondingly shaped PATTERN LINES, which are the flattened style lines, is the NETT PATTERN.

In order to be able to cut pieces of leather which may be stitched together to form the shoe upper it is necessary to add overlap margins to the nett pattern shapes and this gives the GROSS PATTERN. From the gross pattern cutting knives are formed to cut the required leather shapes. The stitched leather shapes are pulled on a LAST, which is a copy of the model last, to assume the required form and are fixed to the shoe sole or UNIT.

In order to make shoes of the same style in other sizes, GRADING is necessary. Thus, lasts are copies from the model last on a last-making machine which alters dimensions differentially in a predetermined manner so that a desired non-proportional scaling is achieved. A grading is necessary also on the nett pattern shapes. This is carried out by scaling the flat nett pattern shapes in a predetermined manner and adding the overlap margins. Different sets of cutting knives are thus made from the different gross patterns for the different sizes.

The mechanical flattening procedure described above has certain disadvantages and it has been proposed in British patent specification No. 1375822 to use a computer program to derive the nett pattern from the model last. British patent specification No. 1414298 describes an improved method of deriving the nett pattern, again preferably using a computer. In these systems it is necessary to feed information to the computer which defines the shape of the model last. Such information can be derived from a probe which is placed in turn on selected points on the last and which gives the three-dimensional x, y, z coordinates of those points in digitized form. The selected points lie on PRINCIPAL LINES, which are defined as lines on the last surface which join the digitized points. These lines may be, for example, cross-sectional lines equally spaced along the last, or conventional reference lines such as the heel curve, the cone centre line and inner and outer feather lines.

Existing design procedures have disadvantages. In particular, the problem of grading a design for different shoe sizes presents difficulties. A particular style can look well in one size and yet be very unsatisfactory in another. With current practice it is difficult to assess the effect of grading a design without making several prototypes in different sizes. Furthermore, the existing practice of grading the nett patterns gives rise to discrepancies as size changes and it is found that further unpredicted modifications must be made to make the stitched uppers fit the graded lasts. The present invention seeks to alleviate these difficulties.

According to one aspect of the invention there is provided a method of producing a pattern for a shoe comprising: applying as input to a computer (a) information defining the three-dimensional shape of a model last and (b) information defining the three-dimensional shape of style lines on the model last; operating on the shape information (a) and (b) with a grading program to derive corresponding last and style line three-dimensional shape information (c) for at least one other shoe size; and operating on the information (c) for the said other shoe size with a flattening program to derive a respective shoe pattern. With this arrangement, grading is performed on the three-dimensional information of both the last and the style lines, and not merely on the two-dimensional nett pattern as before. This grading "in the round" aids better fitting and appearance and, furthermore, enables the effect of grading of a style to be examined and perhaps modified for different sizes without recourse to making graded lasts or shoes.

Preferably the shape information (a), (b) or (c) is capable of being modified before the operation of the grading or flattening program respectively by manual interactive use of a graphical input device to the computer, in conjunction with a display of the shape information to be modified.

Preferably, for the purpose of modification, the three-dimensional information (a), (b) or (c) is subjected to a flattening program and the flattened nett pattern is displayed, the input device interacting with the display so that manually applied modifications are subjected to the inverse of the flattening program, thereby producing a three-dimensional modification.

The display device may be a storage cathode-ray tube which displays the model last in the form of skeletal lines. Alternatively, and preferably in addition, the display device comprises a television display showing the model last in full perspective, preferably in colour.

When a storage tube is used there may be associated with it a writing tablet having cross-wires or a pen movable across it. The pen or crosswire arrangement constitutes the input device and may be used to modify the display. A required style line may be selectively presented at the tablet for modification and this is re-drawn by appropriate manipulation. In addition to the perspective display there may be provided a representation (displayed or printed) of the nett pattern corresponding to the displayed model last and style lines. The required modifications can be made with reference to the nett pattern while observing the effect on the perspective view. Thus it will be appreciated that there is provided an immediate visual representation of sketched modifications not only of style lines but also of principal lines of the model last.

When a television display is used, modifications may be made by means of a light pen interacting with the screen of the display. However, unlike the situation when the re-drawing is being carried out in the flat on a representation of the nett pattern, in this case distinction must be made between the front and the back of the displayed perspective. Thus, it is proposed to change the perspective view displayed by the television so as to present the line being modified on the near side. This may be done by manual or automatic selection of one of a number of stored perspective views.

The modification procedure outlined above allows changes to be made freely in the model last shape and the style lines. However, if unrestricted changes were allowed, many of the shoes produced would be unwearable. There are certain constrictions on the choice available for many of the last parameters. Thus, in accordance with another aspect of the invention there is provided a method of designing a piece of footwear consisting in applying as input to a computer (a) information defining the shape of the model last and (b) information defining the shape of style lines on the model last; providing means for manual modification of lines of the model last or style lines; programming the computer to derive from the last shape so modified certain predetermined last parameters and provide an output thereof; and comparing the said output with acceptable range limits for the parameters. In this way design modifications can be kept within the required limits for shoe comfort.

Preferably the flattening program is based on the triangulation program described in British patent specification No. 1414298. The information necessary to define the last shape and style line shapes is preferably derived from a digitizing probe arrangement, the probe being placed in turn on selected points on the principal lines. A splining or fairing program is necessary to produce the best smooth curve joining the points and this program is preferably that known as Polysurf, which defines the points in terms of a co-ordinate and two tangents and which constructs the intervening curves from synthesised cubic curve components. In this way the required surfaces and curved lines are smoothly and continuously defined. "Polysurf" is described in pages 150 to 158 of CAD 76 Proceedings of the CAD Centre, Cambridge.

In the flattening program each selected point on the last surface will have a corresponding point in the nett pattern. Thus, in drawing modified lines on the nett pattern a reverse correlation is established whereby the modified lines can be produced for display in perspective.

In practice the raw last data is read in from paper-tape and used to produce a Polysurf model of the last. The simplest way to do this is to use the Polysurf splining algorithm to generate curves between the node points and then to use the Polysurf fitting algorithm to fit additional points.

The raw style-line data can be converted into a 'last-independent' style-line by translating the digitized x, y, z data into parameterised data (u, v). A style line drawn on one last could then rapidly be displayed on another similar last. Whether the style line is held as x, y, z or u, v co-ordinates it is necessary to interpolate between these co-ordinates. If linear interpolation is used the style-line may be unacceptably polygonal. The alternative is to use a curve fitting algorithm. If the Polysurf splining algorithm is used the style line could be stored as a series of smooth cubic curves. The style line data would then be a series of points each with its associated tangent. This could be done in u, v or x, y, z space.

The invention will further be described with reference to the accompanying drawings, of which:

Figure 1 is an elevation of a model last with style lines;

Figure 2 is a block diagram of a system embodying the present invention for the design of shoes;

Figure 3 is a schematic diagram illustrating a grading process in accordance with the invention; and

Figure 4 is a schematic diagram illustrating a modification of the process described with reference to Figure 3.

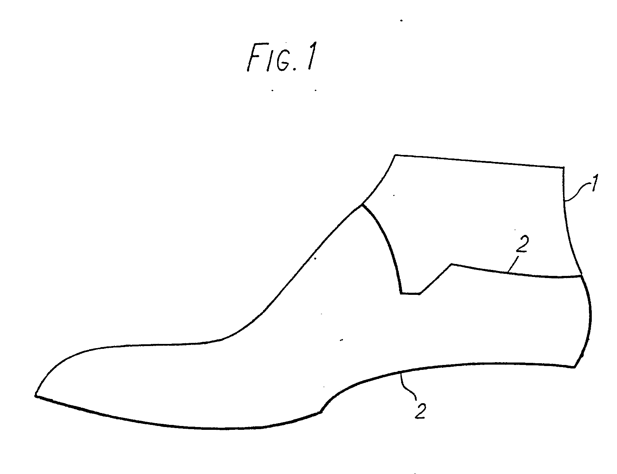

Referring to Figure 1 there is shown a model last 1 with style lines 2 drawn on it. A number of measures, or last parameters are shown, these being used in a manner to be described to place restrictions on the allowable design variations.

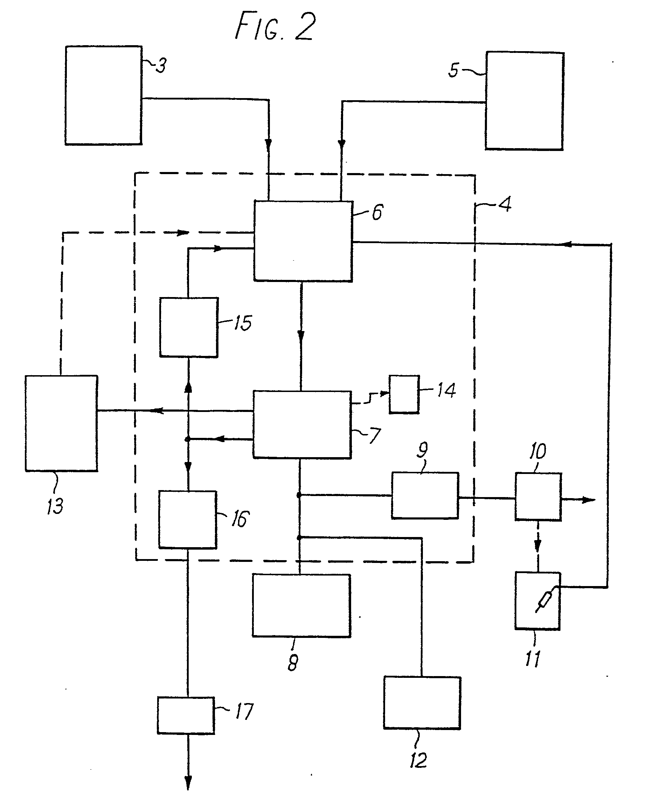

Figure 2 shows a system whereby the design methods of the present invention may be put into effect. A model last digitizer 3 is used to take co-ordinate measurements in digital form of points on the model last around parallel section lines. The information is stored on paper tape and applied to a computer 4. In another measuring operation, after a stylist has drawn the style line, points on these lines are digitized by a style line digitizer 5 and applied via paper tape to the computer 4. The input data is acted on by a Polysurf program unit 6 to produce a Polysurf model of the last. A Polysurf model consists of a rectangular mesh of nodes where each node is represented by 3 vectors; a point and two directions. Between each pair of adjacent nodes, a cubic curve is faired with its end points and end directions determined by the node values. Between each group of four nodes a bicubic patch is faired.

The output from unit 6 is applied to a store 7 and thence to a (Tektronix) storage tube display 8, which shows a perspective skeletal line view of the last. The output from store 7 is applied also to a flattening program unit 9. The flattening program accepts data as a series of cross-sections, each section defined by a string of co-ordinates. These need to be about 30—50 sections and about 30—50 points per section. The Polysurf last will hold 11 sections with 13 nodes per section (6 on each face and 1 on the bottom). The intermediate sections and points will need to be derived.

The flattening program will then 'triangulate' the mesh of points so that between every pair of adjacent sections there is a strip of surface composed of a string of triangles. The flattening process then consists of locating one end of each string (on the cone centre line) and flattening them.

The outer edge of the end triangle of each strip will be located on a reference line. If springing has been selected, this reference line will be the straight cone centre line. Each strip will then be independently flattened by hingeing the triangles along their common edges so that they all lie in a single plane. (The plane containing the reference line).

The result of this procedure is therefore a set of flattened strips all having one end fixed to the reference line. The strips will normally overlap one another and/or have gaps between them (except where they all connect to the reference line).

To produce the Polysurf flattened last, all that is necessary is to find from amongst the flattened triangles those points which correspond with the Polysurf mesh. These node points will be splined to produce the Polysurf flattened last. The output from unit 9 fed to a plotter 10 and the plotted output is applied to a writing tablet 11 for modification purposes.

By drawing with a pen over the writing tablet, using the plotted nett pattern as a guide, information concerning required modifications to the displayed shape is fed back to the Polysurf unit 6. These modifications are put into effect by the program and the changes are displayed and stored. A full colour perspective view of the modified last is obtained on a colour television screen 12. When the final design has been achieved this is passed to a library store 13 and a print out via plotter 10 is given to provide the final nett pattern. A gross pattern program (not shown) may be applied to add stitching margins and provide the final pattern for the cutting knives. Alternatively the leather pieces may be cut by a numerically controlled cutter responsive to the output from unit 9. Also, the manufacturing last can be made by a numerically controlled machine 14 responsive to the output from the store 7.

The library may ultimately provide all necessary basic last shapes in categorical form so that by calling up a desired basis shape and modifying it as described there will be no need for a physical model last. The library 13 also includes design shapes which may be added to the last and manipulated in place by manual adjustment of display controls.

In order to provide graded sizes a grading program unit 15 is provided. This acts on the model last shape information in a predetermined manner to produce in the store 7 different data corresponding to last shapes of different sizes. There are flattened individually by the flattening program unit 9 to produce plotted nett or gross patterns.

In order to restrict the design variations to limits tolerated by the allowable last parameter variations a measure program unit 16 is provided. This is programmed to take the measures indicated in Figure 1 from the data in the store and to print out the parameters by a printer 17. It can then be determined whether the modified or graded last is acceptable.

It is envisaged that a modification program will be included which will allow correlated changes to be made in the last by specifying a dimensional change in a last parameter — e.g. 1/4″ add to heel height.

Once lasts have been modified (designed) using the computer procedures described in earlier sections it will be necessary to manufacture a model last both for further evaluation and ultimately for production use.

One method of producing the new model last is to use a numerically controlled cutting machine.

An alternative method which is described below is to assemble the new model last from a series of stout-board sections. The computer can produce a series of cross-sections of the last at 1/10″ (2.54 mm) intervals (the thickness of the stout-board), and pass them to the water jet cutter. The cutter can cut the sections to produce a series of about 100 templates. Each such template will have a series of locating holes which serve as dowel holes for assembling the model last.

The designer may choose to view the last from any direction and with the apparent light source at any position. However, it is currently estimated that each new view will take between 10 and 20 seconds to generate, and this is likely to be an unacceptable delay in the middle of the design process. It is therefore proposed that various standard pictures of the selected last should be stored by the computer as a batch process. If new views are subsequently requested, these will be added to those stored.

When a style has been sketched, it will be necessary to give further information to fully classify it. The stylist may give the line a name of his own choosing; if he does not, a system name will be generated. The function of the line should also be given; e.g. raw edge of leather, closed seam line, top stitching, and so on. When this has been done the line can be displayed using an appropriate representation on the television and the Tektronix. It is hoped to keep these representations as close to current practice as possible; i.e. pinked solid line for closed seams, broken line for top stitching, and solid line for edge of leather. Other representations may be added as desired; being possible to give a good visualisation of brogue lines, fancy stitching, etc. In this case the designer is saved a lot of work; he need only input the centre-line of the style and the type of representation required.

Referring to Figure 3 there is shown a schematic illustration of the process whereby graded styles are produced for different shoe sizes. Digital information deferring the three-dimensional shape of the model last is applied from a model last unit 30 to a comb combining unit 31, which also receives, from a style line unit 32, digital information concerning the three-dimensional shape of the style lines of the intended shoe design. Unit 31 produces a combined three-dimensional digital output of the style lines and model last shape. Modifications can be made manually by a graphical input device and display as described above.

The output from unit 31 may be subjected to a flattening program at 33 to produce a flattened nett pattern of the model size. This may be subject to a gross pattern program 34 which adds margins for seams to the nett pattern pieces, thereby producing gross pattern piece shapes.

The output from unit 31 is applied also to a grading program 35 which multiplies the length and girth of the model last and style line dimensions by predetermined factors to produce non-proportionally reduced or enlarged versions of the three-dimensional shape information, these corresponding to different shoe sizes (length and fitting). Three outputs from grading unit 35 illustrate the sizes, although in practice there would usually be more.

The sets of three-dimensional co-ordinates for the different sizes are each subjected to the flattening program at 36 and the gross program at 37.

The individual sizes may be modified by displaying the three-dimensional graded information and graphically changing the style lines as described above.

The model last information may be taken directly from the last digitizer 38 or from the library 3 of last dimensions.

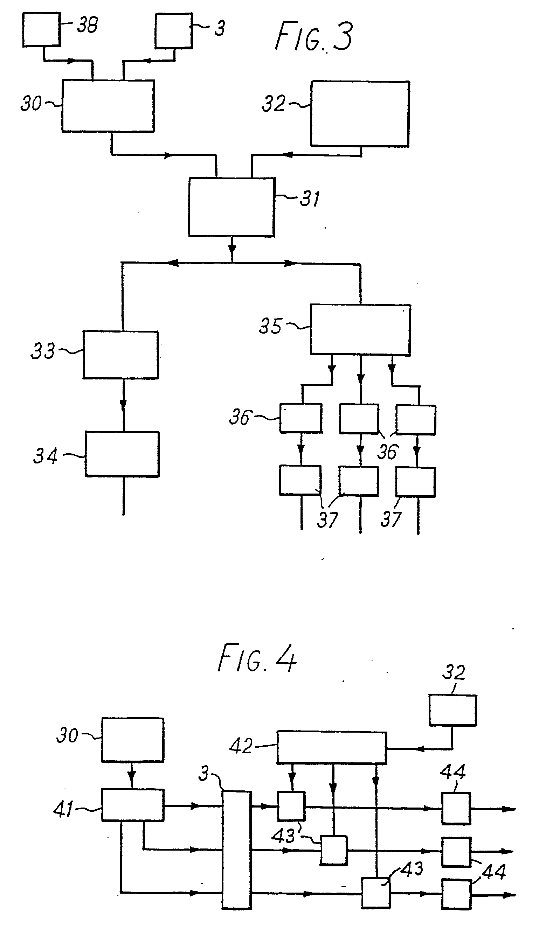

Figure 4 illustrates a modification which makes use of last shape information stored in a library, not only in respect of the model last but also in respect of graded lasts. In Figure 4 the model last information from unit 30 is subjected to the grading program at 41 and three (for example) sets of graded last information is stored in library 3. When a style is to be graded the style line information is subjected to the grading program at 42 and produces three corresponding sets of style line co-ordinates. The respective co-ordinates are combined with the information for those sizes on the required last retrieved from the library. The combination is suggested schematically at 43. The flattening program is applied at 44 to the three-dimensional information.

**Claims**

1. A method of producing a pattern for a shoe, comprising: applying as input to a computer (a) information defining the three-dimensional shape of a model last and (b) information defining the three-dimensional shape of style lines on the model last; operating on the shape information (a) and (b) with a grading program to derive corresponding last and style line three-dimensional shape information (c) for at least one other shoe size; and operating on the information (c) for the said other shoe size with a flattening program to derive a respective shoe pattern.

2. A method as claimed in Claim 1 wherein the grading program applies predetermined magnifications (positive or negative) of the length and girth of the shoe represented by information (a) and (b) to produce information (c).

3. A method as claimed in Claim 1 or Claim 2 wherein the grading program is applied to information (a) and (b) in the same program operation.

4. A method as claimed in Claim 3 wherein information (a) is derived from a library of model last shapes stored in digital form and the style line information (b) is added manually by means of a graphical input device.

5. A method as claimed in Claim 1 or Claim 2 wherein the grading program is applied to information (a) initially and the graded last information for a range of sizes is stored in digital form in a library of last shapes, the required graded last size being selected from the library for combination with the graded information (b) before applying the flattening program.

6. A method as claimed in either of the preceding claims wherein the flattening program produces a nett pattern represented by information which is subjected to a gross pattern program whereby the required gross pattern is produced.

7. A method as claimed in any of the preceding claims wherein the shape information (a), (b) or (c) is capable of being modified before the operation of the grading or flattening program respectively by manual interactive use of a graphical input device to the computer, in conjunction with a display of the shape information to be modified.

8. A method as claimed in Claim 7 wherein, for the purposes of modification, the three-dimensional information (a), (b) or (c) is subjected to a flattening program and the flattened nett pattern is displayed, the input device interacting with the display so that manually applied modifications are subjected to the inverse of the flattening program, thereby producing a three-dimensional modification.

9. A method as claimed in Claim 7 or Claim 8 wherein a three-dimensional display representation of information (a), (b) or (c) may be produced for visual appraisal.

10. Apparatus for producing a pattern for a shoe in accordance with a method as claimed in any of the preceding claims, the apparatus comprising a computer programmed with the said grading and flattening programs.

## Revendications

1. Procédé pour fabriquer un patron pour une chaussure, consistant à: appliquer comme données d'entrée à un ordinateur (a) des informations définissant la forme tridimensionnelle d'une forme à chaussure modèle et (b) des informations définissant la forme tridimensionnelle de lignes de contour sur la forme à chaussure modèle; à traiter les informations de forme (a) et (b) à l'aide d'un programme de gradation en vue d'obtenir des informations correspondantes de forme tridimensionnelle (c) concernant la forme à chaussure et les lignes de contour d'au moins une autre pointure de chaussure; et à traiter les informations (c) concernant ladite autre pointure de chaussure à l'aide d'un programme de reproduction à plat de manière à obtenir un patron respectif de chaussure.

2. Procédé tel que défini dans la revendication 1, selon lequel programme de gradation introduit des accroissements prédéterminés (positifs ou négatifs) de la longueur et du périmètre de la chaussure représentées par les informations (a) et (b), en vue de générer les informations (c).

3. Procédé tel que défini dans la revendication 1 ou la revendication 2, selon lequel le programme de gradation est appliqué aux informations (a) et (b), lors d'une même exécution de programme.

4. Procédé tel que défini dans la revendication 3, selon lequel les informations (a) sont tirées d'une bibliothèque de formes de la forme à chaussure modèle, mémorisées sous forme numérique, et les informations (b) concernant les lignes de contour sont ajoutées manuellement au moyen d'un dispositif d'introduction graphique.

5. Procédé tel que défini dans la revendication 1 ou la revendication 2, selon lequel le programme de gradation est appliqué initialement aux informations (a) et les informations graduées concernant la forme à chaussure pour une gamme de pointures sont mémorisées sous forme numérique dans une bibliothèque de formes de la forme à chaussure, la dimension graduée requise de la forme à chaussure étant sélectionnée dans la bibliothèque en vue d'être combinée aux informations graduées (b) avant l'application du programme de reproduction à plat.

6. Procédé tel que défini dans l'une des revendications précédentes, selon lequel le programme de reproduction à plat fournit un patron net représenté par les informations qui sont soumises à un programme produisant un patron brut, ce qui a pour effet que le patron brut requis est fabriqué.

7. Procédé tel que défini dans l'une quelconque des revendications précédentes, selon lequel les informations de forme (a), (b) ou (c) peuvent être respectivement modifiées avant la mise en oeuvre du programme de gradation ou de reproduction à plat, par l'utilisation manuelle interactive d'un dispositif d'introduction graphique relié à l'ordinateur, en liaison avec un dispositif d'affichage des informations de forme qui doivent être modifiées.

8. Procédé tel que défini dans la revendication 7, selon lequel, à des fins de modifications, les informations tridimensionnelles (a), (b) ou (c) sont soumises à un programme de reproduction à plat et le patron net à plat est affiché, le dispositif d'introduction dialoguant avec le dispositif d'affichage pour que des modifications appliquées manuellement soient soumises à l'inverse du programme de reproduction à plat, ce qui permet d'obtenir une modification tridimensionnelle.

9. Procédé tel que défini dans la revendication 7 ou la revendication 8, selon lequel on peut produire une représentation par affichage tridimensionnel des informations (a), (b) ou (c), en vue d'une appréciation visuelle.

10. Appareil pour fabriquer un patron pour une chaussure conformément à un procédé tel que défini dans l'une quelconque des revendications précédentes, cet appareil comprenant un ordinateur programmé avec lesdits programmes de gradation et de reproduction à plat.

## Patentansprüche

1. Verfahren zum Herstellen eines Musters für einen Schuh, das enthält: Anlegen als Eingabe an einen Computer (a) einer Information, welche die dreidimensionale Form eines Modell-leistens bestimmt, und (b) einer Information, welche die dreidimensionale Form von Stillinien auf dem Modelleisten bestimmt, Einwirken auf die Forminformationen (a) und (b) mit einem Einstufungsprogramm, um eine entsprechende Leisten- und Stillinien-Dreidimensional-Forminformation (c) für wenigstens eine andere Schuhgröße abzuleiten, und Einwirken auf die Information (c) für die andere Schuhgröße mit einem Abflachungsprogramm, um ein entsprechendes Schuhmuster abzuleiten.

2. Verfahren nach Anspruch 1, bei dem das Einstufungsprogramm vorbestimmte Größen (positive oder negative) der Länge und des Umfangs des Schuhs, die durch die Informationen (a) und (b) dargestellt werden, anwendet, um die Information (c) zu erzeugen.

3. Verfahren nach Anspruch 1 oder 2, bei dem das Einstufungsprogramm auf die Informationen (a) und (b) in derselben Programmoperation angewendet wird.

4. Verfahren nach Anspruch 3, dadurch gekennzeichnet, daß die Information (a) von einer Bücherei der Modelleistenformen, die in digitaler Form gespeichert sind, abgeleitet wird und daß die Stillinieninformation (b) manuell mittels einer graphischen Eingabevorrichtung hinzugefügt wird.

5. Verfahren nach Anspruch 1 oder 2, bei dem das Einstufungsprogramm auf die Information (a) anfänglich angewendet wird und daß die abgeflachte Leisteninformation für einen Bereich von Größen in digitaler Form in der Bücherei der Leistenformen gespeichert wird, wobei die gewünschte eingestufte Leistenform aus der Bücherei für eine Kombination mit der eingestuften Information (b) ausgewählt wird, bevor das Abflachungsprogramm angewendet wird.

6. Verfahren nach einem der vorangehenden Ansprüche, bei dem das Abflachungsprogramm ein Nettomuster erzeugt, das durch eine Information dargestellt ist, die einem Bruttomusterprogramm unterworfen wird, wodurch das gewünschte Bruttomuster erzeugt wird.

7. Verfahren nach einem der vorangehenden Ansprüche, bei dem die Forminformation (a), (b) oder (c) in der Lage ist, vor der Operation des Einstufungs- oder Abflachungsprogramms jeweils durch manuell gegenseitig wirksame Verwendung der graphischen Eingabevorrichtung zu dem Computer geändert zu werden, und zwar mit einer Anzeige der zu ändernden Forminformation.

8. Verfahren nach Anspruch 7, bei dem zum Zwecke der Änderung die dreidimensionale Information (a), (b) oder (c) dem Abflachungsprogramm unterworfen wird und das abgeflachte Nettomuster angezeigt wird, wobei die Eingabevorrichtung mit der Anzeige so zusammenwirkt, daß manuell zugeführte Änderungen der Umkehr des Abflachungsprogramms unterworfen werden, wodurch eine dreidimensionale Änderung erzeugt wird.

9. Verfahren nach Anspruch 7 oder 8, bei dem eine dreidimensionale Anzeigedarstellung der Information (a), (b) oder (c) für die visuelle Auswertung angezeigt werden kann.

10. Vorrichtung zum Herstellen eines Musters für einen Schuh in Übereinstimmung mit einem Verfahren, wie es in einem der vorangehenden Ansprüche beansprucht wird, wobei die Vorrichtung einen Computer enthält, der mit den Einstufungs- und Abflachungsprogrammen programmiert ist.

FIG. 1

FIG. 2

FIG. 3

FIG. 4